# FASCICULE DE BREVET EUROPEEN

(11) **EP 3 224 063 B1**
(45) Date de publication et mention de la délivrance du brevet: **26.09.2018**
(21) Numéro de dépôt: 15801140.3
(22) Date de dépôt: 20.11.2015
(51) Int. Cl.: B60C 11/13, B60C 11/11, B60C 11/12

(54) **BANDE DE ROULEMENT DE PNEU DE GENIE CIVIL COMPRENANT DES BLOCS INCISES**
LAUFFLÄCHE FÜR EINEN ERDBEWEGUNGSREIFEN MIT BLÖCKEN MIT EINSCHNITTEN
TREAD FOR AN EARTHMOVER TYRE, COMPRISING INCISED BLOCKS

(30) Priorité: 25.11.2014 FR 1461438
(43) Date de publication de la demande: 04.10.2017
(73) Titulaire: Compagnie Générale des Etablissements Michelin, 63000 Clermont-Ferrand (FR)
(72) Inventeur: SPINNLER, Olivier, 63040 Clermont-Ferrand Cedex 9 (FR)
(74) Mandataire: Diernaz, Christian
(86) Numéro de dépôt international: PCT/EP2015/077200
(87) Numéro de publication internationale: WO 2016/083255

(56) Documents cités:
- EP-A2- 1 127 715
- WO-A1-2012/131081
- WO-A1-2014/102136
- FR-A1- 2 997 043
- JP-A- 2011 011 627
- JP-A- 2011 011 696

## Description

### DOMAINE DE L'INVENTION

La présente invention concerne les pneus pour engins de travaux de génie civil et notamment les dessins de sculptures des bandes de roulement de ces pneus.

### ÉTAT DE LA TECHNIQUE

Pour assurer une adhérence satisfaisante en motricité et en freinage, il est nécessaire de former sur une bande de roulement d'un pneu une sculpture, cette sculpture comprenant un ensemble de découpures et de cavités plus ou moins complexe. Ces découpures et cavités forment un dessin de sculpture à la fois sur la surface dite surface de roulement destinée à venir en contact avec le sol et dans l'épaisseur de la bande.

Il est connu notamment par le document de brevet FR 1452048 de former des découpures larges (dites « rainures ») et des découpures étroites (dites « incisions »). Une incision a une largeur appropriée pour que les faces en vis-à-vis la délimitant puissent venir au moins partiellement en contact lors du passage dans la zone de contact avec la chaussée. Ainsi, il est possible de bénéficier de la présence d'arêtes formées à l'intersection des découpures avec une surface de roulement tout en conservant des rigidités suffisantes à la bande dès lors que les parois en vis-à-vis sont en contact l'une contre l'autre au moins en partie.

Les documents WO 2012/131081 A1, WO 2014/102136 A1, EP1127715 A2 font également partie de l'état de la technique.

Les bandes de roulement pour les pneus destinés aux véhicules de génie civil ont en général des épaisseurs importantes de matière à user, c'est-à-dire au moins égales à 60 mm. Dans les conditions d'utilisation préconisées, ces fortes épaisseurs peuvent générer des élévations de température résultant des déformations cycliques provoquées par le roulage. Pour obtenir de bonnes performances avec le temps il est nécessaire de réduire cette température de fonctionnement, au moins lorsque la bande de roulement est neuve, en augmentant la ventilation des régions de la bande de roulement qui sont le plus susceptibles de subir de fortes élévations de températures.

### Définitions :

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Plan médian équatorial : c'est un plan perpendiculaire à l'axe de rotation et passant par les points du pneu radialement les plus éloignés dudit axe. Pour une bande de roulement ce plan divise la bande dans sa largeur en deux moitiés d'égales largeurs.

Un bloc est un élément en relief formé sur la bande de roulement qui est délimité par des creux ou rainures et comprenant des parois latérales et une face de contact destinée à venir en contact avec la chaussée.

Dans le présent document, une découpure désigne de manière générique soit une rainure soit une incision et correspond à l'espace délimité par des parois de matière se faisant face et distantes l'une de l'autre d'une distance (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions normales de roulage.

Une bande de roulement a une épaisseur maximale de matière à user en roulage ; une fois cette épaisseur maximale atteinte le pneu peut être remplacé par un pneu neuf ou bien rechapé, c'est-à-dire pourvu d'une nouvelle bande de roulement. Le volume de matière à user correspond pour les pneus de l'invention à la quantité de matière située entre la surface de roulement à l'état neuf et une surface virtuelle parallèle à la surface de roulement à l'état neuf et passant par les points les plus à l'intérieur des découpures formées dans la bande de roulement.

Par axialement vers l'extérieur, on entend une direction qui est orientée vers l'extérieur de la cavité interne du pneu.

Les conditions usuelles de roulage du pneu ou conditions d'utilisation sont celles qui sont définies par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

### BREF EXPOSE DE L'INVENTION

La présente invention vise à améliorer les performances d'adhérence des bandes de roulement de fortes épaisseurs tout en limitant l'augmentation de la température de fonctionnement dans les régions du pneu les plus chaudes.

A cet effet, l'invention a pour objet une bande de roulement pour pneu pour véhicule de génie civil, ce pneu comprenant une armature de carcasse surmontée d'une armature de sommet. La bande de roulement selon l'invention surmonte l'armature de sommet et comprend une surface - dite surface de roulement - qui est destinée à venir en contact avec un sol lors du roulage du pneu. Cette bande de roulement a une épaisseur totale de matière à user au moins égale à 60 mm et comprenant sur sa surface de roulement un dessin de sculpture formé d'une pluralité de blocs de matière, chaque bloc étant délimité par des rainures transversales ou obliques - c'est-à-dire faisant un angle au moins égal à 45 degrés avec la direction circonférentielle - et des rainures d'orientation générale circonférentielle. Une pluralité de blocs sont pourvus d'une incision comprenant trois branches d'incision, ces trois branches d'incision ayant en commun une extrémité formant un puits s'étendant dans l'épaisseur de la bande, une première branche étant orientée dans une direction transversale ou oblique, une deuxième branche et une troisième branche s'ouvrant à l'état neuf chacune dans une rainure transversale délimitant ledit bloc.

Ce pneu est tel que l'angle formé entre la première branche et la deuxième branche est au moins égal à 100 degrés et au plus égal à 125 degrés et tel que l'angle formé entre la première branche et la troisième branche est au moins égal à 100 degrés et au plus égal à 125 degrés.

En outre, après une usure comprise entre 45% et 70% de l'épaisseur totale à user, les longueurs des trois branches d'incision mesurées sur la nouvelle surface de roulement, respectivement L1', L2', L3' sont inférieures aux longueurs, respectivement L1, L2, L3, mesurées sur la surface de roulement à l'état neuf, et les diminutions de longueurs sont au moins égales à 30% des longueurs initiales respectives.

Les branches de chaque incision à trois branches ont une largeur appropriée pour pouvoir se fermer au moins en partie lors du passage dans le contact avec le sol sur lequel la bande de roulement vient en contact. Ces largeurs peuvent être raisonnablement choisies comme étant au moins égales à 8% de l'épaisseur de matière à user et au plus 16% de cette même épaisseur.

Préférentiellement les diminutions de longueurs sont au moins égales à 30% et au plus égales à 60% des longueurs initiales respectives de chaque branche.

Préférentiellement après une usure supérieure à 95% de l'épaisseur totale à user, les longueurs des trois branches mesurées sur la nouvelle surface de roulement, respectivement L1", L2", L3" sont inférieures aux longueurs initiales - respectivement L1, L2, L3 - mesurées sur la surface de roulement à l'état neuf.

Préférentiellement, la première branche comporte, sur la surface de roulement à l'état neuf, deux extrémités dont une est commune avec les deux autres branches et une autre est située axialement entre l'extrémité commune et le plan médian équatorial du pneu.

Avantageusement, si la première branche ne s'ouvre pas dans une rainure, elle est pourvue à son extrémité non commune avec les deux autres branches avec un puits de diamètre supérieur à la largeur de la première branche afin de réduire les contraintes en cette extrémité et favoriser l'évacuation des calories produites dans la bande de roulement en roulage. Ce puits s'étend en profondeur au moins jusqu'à la réduction de longueur de la première incision.

Dans ce dernier cas et pour favoriser l'évacuation des calories générées dans la bande de roulement, il est avantageux de pourvoir chaque bloc avec, outre l'incision à trois branches telle que décrite précédemment, un puits de profondeur au moins égale à 30% de de l'épaisseur totale à user, ce puits n'étant pas connecté à l'incision à trois branches.

Dans une variante intéressante de l'invention les profondeurs à partir desquelles les longueurs des deuxième et troisième incisions sont réduites sont différentes entre elles ceci afin d'augmenter les mouvements d'air dans ces incisions pour augmenter l'évacuation des calories.

Préférentiellement, à l'état neuf les trois branches de l'incision selon l'invention se connectent entre elles sur un puits de dimension maximale en surface au moins égal à 10% et plus égal à 20% de la longueur circonférentielle du bloc (longueur mesurée dans la direction circonférentielle). Avantageusement, ce puits a une section qui diminue avec la profondeur afin de limiter la possibilité de capturer des corps étrangers susceptibles de blesser le pneu pourvu de cette bande de roulement.

Pour améliorer le blocage entre les parois délimitant les branches de l'incision selon l'invention, il est judicieux de prévoir la présence d'ondulations ou de zigzags sur les parois de ces branches. Préférentiellement, les deuxième et troisième branches sont pourvues d'ondulations dans deux directions tandis que la première branche est pourvue d'ondulations dans la profondeur.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une vue partielle d'une bande de roulement selon l'invention ;
La figure 2 représente une vue partielle d'une bande de roulement après une usure partielle ;
La figure 3 montre une vue d'un bloc d'une bande de roulement à l'état neuf selon une autre variante.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

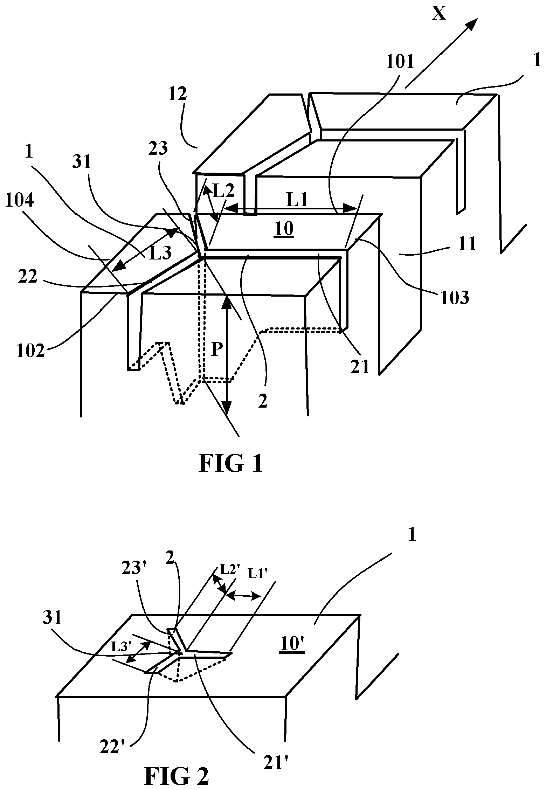

La figure 1 représente une vue partielle d'une bande de roulement d'un pneu de génie civil selon l'invention.

Ce pneu comprend une armature de carcasse surmontée d'une armature de sommet cette dernière étant elle-même surmontée d'une bande de roulement dont une surface - dite surface de roulement - est destinée à venir en contact avec un sol lors du roulage du pneu.

Cette bande de roulement a une épaisseur de matière à user au moins égale à 60 mm. Cette épaisseur correspond à l'épaisseur de matière entre la surface de roulement à l'état neuf et un niveau correspondant à une usure maximale. Cette bande comprend sur sa surface de roulement un dessin de sculpture, ce dessin étant formé d'une pluralité de blocs 1 de matière, chaque bloc 1 étant délimité par des rainures transversales 11 - c'est-à-dire faisant un angle égal à 90 degrés avec la direction circonférentielle (indiquée par la flèche X) et des rainures 12 d'orientation circonférentielle.

Sur cette figure 1 sont représentés deux blocs 1 comprenant chacun une face de contact 10 formant une partie de la surface de roulement de la bande. Chaque face de contact 10 de chaque bloc 1 est délimitée par des arêtes latérales et des arêtes d'attaque et de fuite. Les arêtes latérales 103, 104 bordent les rainures circonférentielles délimitant les blocs. L'arête d'attaque 101 correspond à l'arête frontale entrant la première dans le contact avec le sol tandis que l'arête de fuite 102 correspond à l'arête arrière de la face de contact entrant en dernier dans le contact.

Sur la face de contact 10 de chaque bloc 1 s'ouvre une incision 2 à trois branches, ces trois branches 21, 22, 23 ayant en commun une extrémité formant un puits 31 radial ayant une profondeur P correspondant à la profondeur maximale de l'incision 2. Une première branche 21 est orientée dans une direction transversale parallèle à la direction des rainures transversales 11 délimitant le bloc 1, une deuxième branche 22 et une troisième branche 23 s'ouvrent à l'état neuf chacune dans une rainure transversale délimitant le bloc.

Dans cette variante, l'angle formé entre la première branche 21 et la deuxième branche 22 de l'incision 2 est au moins égal à 100 degrés et au plus égal à 125 degrés et l'angle formé entre la première branche 21 et la troisième branche 23 est au moins égal à 100 degrés et au plus égal à 125 degrés.

Dans cette variante, les trois branches de l'incision 2 s'ouvrent à l'état neuf dans les rainures. La première branche a une longueur L1 mesurée sur la face de contact à l'état neuf tandis que les deuxième et troisième branches ont des longueurs L2 et L3 respectivement.

Après une usure comprise entre 45% et 70% de l'épaisseur totale à user mesurée entre la surface de roulement à l'état neuf et une limite d'usure de la bande de roulement, et comme cela est montré avec la figure 2, l'incision 2 conserve ses trois branches qui restent connectées le long du même puits radial 31 tout en présentant des longueurs mesurées sur la nouvelle surface de roulement, respectivement L1', L2', L3' qui sont inférieures aux longueurs respectivement L1, L2, L3 mesurées sur la surface de roulement à l'état neuf. Les diminutions de longueurs sont au moins égales à 30% des longueurs initiales respectives : cela signifie par exemple que L1' est inférieur à 70% de L1. Dans le cas présenté, les variations des longueurs des trois branches sont exprimées en pourcentages identiques. Ces trois branches de l'incision restent présentes sur la surface de roulement jusqu'à usure complète de la bande.

Grâce à cette disposition, il est possible de trouver un équilibre de fonctionnement à la fois d'un point de vue mécanique et d'un point de vue thermique.

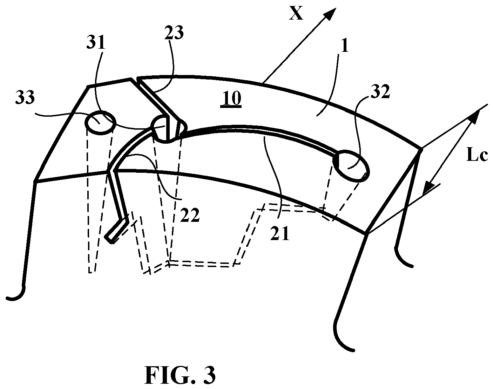

La figure 3 montre, dans une autre variante de l'invention, un bloc 1 d'une bande de roulement à l'état neuf, ce bloc étant pourvue d'une incision 2 à trois branches. Dans cette variante, le puits 31 sur lequel sont connectées les trois branches 21, 22, 23 de l'incision 2 a une section de forme circulaire de diamètre égal à trois fois la largeur moyenne de chaque branche de l'incision, cette largeur étant mesurée sur la surface de roulement à l'état neuf. Le diamètre de la section du puits 31 sur la surface de roulement à l'état neuf est compris entre 10% et 20% de la longueur circonférentielle Lc du bloc 1.

Dans cette disposition, les trois branches 21, 22, 23 sont connectées entre elles par l'intermédiaire de ce puits 31 tout en étant légèrement désaxées par rapport au centre du cercle de la section du puits.

En outre, la première branche 21 de l'incision 2 se termine à l'intérieur du bloc 1 par un deuxième puits radial 32 de section semblable à celle du puits 31 sur lequel sont connectées les trois branches de l'incision. En combinaison avec ces deux puits un troisième puits 33 est formé dans la partie de l'élément délimitée par les deuxième et troisième branches de l'incision et dépourvue de toute autre incision. Ce troisième puits 33 n'est pas relié à l'incision et a pour fonction d'équilibrer le bloc d'un point de vue mécanique et thermique. Préférentiellement les puits 31, 32, 33 mis en oeuvre ici ont une forme tronconique c'est-à-dire une section allant en diminuant avec l'usure de la bande pour éviter de capturer des corps étrangers pouvant éventuellement blesser la bande de roulement.

L'invention qui a été ici décrite avec ces exemples ne saurait être limitée à ces seuls exemples et diverses modifications peuvent y être apportées sans sortir du cadre défini par les revendications. Notamment les blocs peuvent être limités par des rainures ayant des géométries curvilignes et dans pareil cas les incisions peuvent prendre des géométries curvilignes et non rectilignes comme montrées avec les figures 1 à 3.

## Revendications

1. Bande de roulement pour pneu pour véhicule de génie civil, cette bande de roulement ayant une surface - dite surface de roulement - destinée à venir en contact avec un sol lors du roulage du pneu, cette bande de roulement ayant une épaisseur de matière à user au moins égale à 60 mm et comprenant sur sa surface de roulement un dessin de sculpture formé d'une pluralité de blocs (1) de matière, chaque bloc (1) étant délimité par des rainures transversales ou obliques (11) - c'est-à-dire faisant un angle au moins égal à 45 degrés avec la direction circonférentielle - et des rainures circonférentielles (12), cette bande de roulement étant **caractérisée en ce qu'**une pluralité de blocs (1) sont pourvus d'une incision (2) à trois branches d'incision (21, 22, 23), ces trois branches ayant en commun une extrémité, une première branche (21) étant orientée dans une direction transversale ou oblique, une deuxième branche (22) et une troisième branche (23) s'ouvrant à l'état neuf chacune dans une rainure transversale (11) délimitant le bloc (1), chaque incision (2) étant telle que l'angle formé entre la première branche (21) et la deuxième branche (22) est au moins égal à 100 degrés et au plus égal à 125 degrés et tel que l'angle formé entre la première branche et la troisième branche est au moins égal à 100 degrés et au plus égal à 125 degrés, cette incision (2) étant, après une usure comprise entre 45% et 70% de l'épaisseur totale à user, telle que les longueurs des trois branches (21, 22, 23) mesurées sur la nouvelle surface de roulement, respectivement L1', L2', L3' sont inférieures aux longueurs respectivement L1, L2, L3 mesurées sur la surface de roulement à l'état neuf, et les diminutions de longueurs sont au moins égales à 30% des longueurs initiales respectives.

2. Bande de roulement selon la revendication 1 **caractérisée en ce que** les diminutions de longueurs des branches (21, 22, 23) des incisions (2) sont au moins égales à 30% et au plus égales à 60% des longueurs initiales respectives de chaque branche.

3. Bande de roulement selon la revendication 1 ou la revendication 2 **caractérisée en ce que** après une usure supérieure à 95% de l'épaisseur totale à user, les longueurs des trois branches (21, 22, 23) mesurées sur la nouvelle surface de roulement, respectivement L1", L2", L3" sont inférieures aux longueurs initiales - respectivement L1, L2, L3 - mesurées sur la surface de roulement à l'état neuf

4. Bande de roulement selon l'une des revendications 1 à 3 **caractérisée en ce que** la première branche (21) comporte, sur la surface de roulement à l'état neuf, deux extrémités dont une est commune avec les deux autres branches et une autre est située axialement entre l'extrémité commune et le plan médian équatorial du pneu.

5. Bande de roulement selon la revendication 4 **caractérisée en ce que** la première branche (21) de l'incision (2) est pourvue à son extrémité non commune avec les deux autres branches avec un puits (32) de diamètre supérieur à la largeur de la première branche afin de réduire les contraintes en cette extrémité et favoriser l'évacuation des calories produites dans la bande de roulement en roulage, ce puits (32) s'étendant en profondeur au moins jusqu'à la réduction de longueur de la première incision.

6. Bande de roulement selon la revendication 5 **caractérisée en ce que** pour favoriser l'évacuation des calories générées dans la bande de roulement, le puits (32) formé à l'extrémité de la première branche (21) non commune avec les deux autres branches a une profondeur au moins égale à 30% de de l'épaisseur totale à user.

7. Bande de roulement selon l'une des revendications 1 à 6 **caractérisée en ce que** les profondeurs à partir desquelles les longueurs des deuxième et troisième branches des incisions (2) sont réduites sont différentes entre elles ceci afin d'augmenter les mouvements d'air dans ces branches et ainsi augmenter l'évacuation des calories.

8. Bande de roulement selon l'une des revendications 1 à 7 **caractérisée en ce qu'**à l'état neuf les trois branches (21, 22, 23) de l'incision se connectent entre elles sur un puits (31) de dimension maximale en surface au moins égal à 10% et plus égal à 20% de la longueur circonférentielle du bloc

9. Bande de roulement selon la revendication 8 **caractérisée en ce que** le puits (31) sur lequel sont reliées les trois branches de l'incision a une section qui diminue avec la profondeur afin de limiter la possibilité de capturer des corps étrangers susceptibles de blesser le pneu pourvu de cette bande de roulement.

10. Bande de roulement selon l'une des revendications 1 à 9 **caractérisée en ce que** les deuxième et troisième branches sont pourvues d'ondulations dans deux directions tandis que la première branche est pourvue d'ondulations dans la profondeur.

## Patentansprüche

1. Lauffläche für einen Reifen für ein Baufahrzeug, wobei diese Lauffläche eine Oberfläche - Rollfläche genannt - umfasst, die dazu bestimmt ist, mit einem Boden beim Rollen des Reifens in Kontakt zu kommen, wobei diese Lauffläche eine abzunutzende Materialdicke mindestens gleich 60 mm hat und auf ihrer Rollfläche eine skulpturales Design umfasst, das von einer Vielzahl von Materialblöcken (1) gebildet ist, wobei jeder Block (1) von quer verlaufenden oder schrägen Nuten (11) - d. h. die einen Winkel mindestens gleich 45 Grad mit der Umfangsrichtung bilden - und Umfangsnuten (12) begrenzt ist, wobei diese Lauffläche **dadurch gekennzeichnet ist, dass** eine Vielzahl von Blöcken (1) mit einem Einschnitt (2) mit drei Einschnittzweigen (21, 22, 23) versehen ist, wobei diese drei Zweige ein Ende gemeinsam haben, wobei ein erster Zweig (21) in eine quer verlaufende oder schräge Richtung ausgerichtet ist, wobei sich ein zweiter Zweig (22) und ein dritter Zweig (23) im Neuzustand jeweils in eine den Block (1) begrenzende Quernut (11) öffnen, wobei jeder Einschnitt (2) derart ist, dass der zwischen dem ersten Zweig (21) und dem zweiten Zweig (22) gebildete Winkel mindestens gleich 100 Grad und höchstens gleich 125 Grad ist, und dass der zwischen dem ersten Zweig und dem dritten Zweig gebildete Winkel mindestens gleich 100 Grad und höchstens gleich 125 Grad ist, wobei dieser Einschnitt (2) nach einer Abnutzung zwischen 45% und 70% der abzunutzenden Gesamtdicke derart ist, dass die Längen der drei Zweige (21, 22, 23), gemessen auf der neuen Rollfläche L1', L2' bzw. L3' kleiner als die Längen L1, L2 bzw. L3, gemessen auf der Rollfläche im Neuzustand, sind, und die Längenverminderungen mindestens gleich 30% der jeweiligen Anfangslängen sind.

2. Lauffläche nach Anspruch 1, **dadurch gekennzeichnet, dass** die Längenverminderungen der Zweige (21, 22, 23) der Einschnitte (2) mindestens gleich 30% und höchstens gleich 60% der jeweiligen Anfangslängen jedes Zweiges sind.

3. Lauffläche nach Anspruch 1 oder Anspruch 2, **dadurch gekennzeichnet, dass** nach einer Abnutzung von mehr als 95% der abzunutzenden Gesamtdicke die Längen der drei Zweige (21, 22, 23), gemessen auf der neuen Rollfläche L1", L2" bzw. L3" kleiner als die Anfangslängen L1, L2 bzw. L3, gemessen auf der Rollfläche im Neuzustand, sind.

4. Lauffläche nach einem der Ansprüche 1 bis 3, **dadurch gekennzeichnet, dass** der erste Zweig (21) auf der Rollfläche im Neuzustand zwei Enden umfasst, von denen eines mit den zwei anderen Zweigen gemeinsam ist, und ein weiteres axial zwischen dem gemeinsamen Ende und der Mitteläquatorialebene des Reifens angeordnet ist.

5. Lauffläche nach Anspruch 4, **dadurch gekennzeichnet, dass** der erste Zweig (21) des Einschnittes (2) an seinem nicht gemeinsamen Ende mit den zwei anderen Zweigen mit einem Schacht (32) mit einem größeren Durchmesser als die Breite des ersten Zweiges versehen ist, um die Spannungen an diesem Ende zu verringern und die Ableitung der in der Lauffläche beim Rollen erzeugten Kalorien zu begünstigen, wobei sich dieser Schacht (32) in der Tiefe zumindest bis zur Längenverminderung des ersten Einschnitts erstreckt.

6. Lauffläche nach Anspruch 5, **dadurch gekennzeichnet, dass** zur Begünstigung der Ableitung der in der Lauffläche erzeugten Kalorien der an dem nicht mit den zwei anderen Zweigen gemeinsamen Ende des ersten Zweiges (21) ausgebildete Schacht (32) eine Tiefe mindesteng gleich 30% der abzunutzenden Gesamtdicke hat.

7. Lauffläche nach einem der Ansprüche 1 bis 6, **dadurch gekennzeichnet, dass** die Tiefen, ab denen die Längen der zweiten und dritten Zweige der Einschnitte (2) verringert werden, zueinander unterschiedlich sind, um die Luftbewegungen in diesen Zweigen zu erhöhen und so die Ableitung der Kalorien zu erhöhen.

8. Lauffläche nach einem der Ansprüche 1 bis 7, **dadurch gekennzeichnet, dass** sich im Neuzustand die drei Zweige (21, 22, 23) des Einschnittes an einem Schacht (31) mit einer Maximalabmessung an der Oberfläche mindestens gleich 10% und höchstens gleich 20% der Umfangslänge des Blocks verbinden.

9. Lauffläche nach Anspruch 8, **dadurch gekennzeichnet, dass** der Schacht (31), an dem die drei Zweige des Einschnitts verbunden sind, einen Querschnitt hat, der mit der Tiefe abnimmt, um die Möglichkeit zu begrenzen, Fremdkörper einzufangen, die den Reifen, der mit dieser Lauffläche versehen ist, verletzen können.

10. Lauffläche nach einem der Ansprüche 1 bis 9, **dadurch gekennzeichnet, dass** die zweiten und dritten Zweige mit Ondulationen in zwei Richtungen versehen sind, während der erste Zweig mit Ondulationen in der Tiefe versehen ist.

## Claims

1. Tread for a tyre for a construction plant vehicle, this tread having a surface - referred to as tread surface - intended to come into contact with the ground when the tyre is running, this tread having a wearable thickness of material at least equal to 60 mm and comprising on its tread surface a tread pattern design formed of a plurality of blocks (1) of material, each block (1) being delimited by transverse or oblique grooves (11) - which means to say grooves making an angle at least equal to 45 degrees with the circumferential direction - and circumferential grooves (12), this tread being **characterized in that** a plurality of blocks (1) are provided with a sipe (2) having three incised branches (21, 22, 23) these three branches having one end in common, a first branch (21) being oriented in a transverse or oblique direction, a second branch (22) and a third branch (23) each opening when new into a transverse groove (11) delimiting the block (1), each sipe (2) being such that the angle formed between the first branch (21) and the second branch (22) is at least equal to 100 degrees and at most equal to 125 degrees and such that the angle formed between the first branch and the third branch is at least equal to 100 degrees and at most equal to 125 degrees, this sipe (2) being, after wear representing between 45% and 70% of the total wearable thickness, such that the lengths of the three branches (21, 22, 23) measured on the new tread surface, L1', L2', L3' respectively, are shorter than the lengths L1, L2, L3 respectively measured on the tread surface when new, and the reductions in length are at least equal to 30% of the respective initial lengths.

2. Tread according to Claim 1, **characterized in that** the reductions in length of the branches (21, 22, 23) of the sipes (2) are at least equal to 30% and at most equal to 60% of the respective initial lengths of each branch.

3. Tread according to Claim 1 or Claim 2, **characterized in that** after wear representing more than 95% of the total wearable thickness, the lengths of the three branches (21, 22, 23) measured on the new tread surface, respectively L1", L2", L3" are shorter than the initial lengths - L1, L2, L3 respectively - measured on the tread surface when new.

4. Tread according to one of Claims 1 to 3, **characterized in that** the first branch (21) comprises, on the tread surface when new, two ends one of which is common to the other two branches and another of which is situated axially between the common end and the equatorial midplane of the tyre.

5. Tread according to Claim 4, **characterized in that** the first branch (21) of the sipe (2) is provided at its end not common to the other two branches with a well (32) of a diameter greater than the width of the first branch so as to reduce the stresses at this end and encourage the removal of heat produced in the tread during running, this well (32) extending depthwise at least as far as the reduction in length of the first sipe incision.

6. Tread according to Claim 5, **characterized in that** in order to encourage the removal of the heat generated in the tread, the well (32) formed at the end of the first branch (21) that is not common to the other two branches has a depth at least equal to 30% of the total wearable thickness.

7. Tread according to one of Claims 1 to 6, **characterized in that** the depths from which the lengths of the second and third branches of the sipes (2) are reduced differ from one another so as to increase the movement of air in these branches and thus increase the removal of heat.

8. Tread according to one of Claims 1 to 7, **characterized in that**, when new, the three branches (21, 22, 23) of the sipe interconnect at a well (31) with a maximum surface dimension at least equal to 10% and at most equal to 20% of the circumferential length of the block.

9. Tread according to Claim 8, **characterized in that** the well (31) to which the three branches of the sipe are connected has a cross section that decreases with depth so as to limit the possibility of trapping foreign bodies liable to damage the tyre provided with this tread.

10. Tread according to one of Claims 1 to 9, **characterized in that** the second and third branches are provided with undulations in two directions whereas the first branch is provided with undulations in the depthwise direction.
